# EUROPEAN PATENT APPLICATION

(11) **EP 1 335 145 A1**
(43) Date of publication of application: **13.08.2003**
(21) Application number: 03001872.5
(22) Date of filing: 29.01.2003
(51) Int. Cl.: F16D 65/02

(54) **Anchoring holder for disc brake pad**

(30) Priority: 08.02.2002 BR 0200449
(71) Applicant: Fras-Le S/A, Rio Grande do Sul (BR)
(72) Inventor: Marcoon, Flavio, Caxias do Sul, Rio Grande do Sul (BR)
(74) Representative: Rothkopf, Ferdinand

(57) **Abstract**

The anchoring holder or back plate for disc brake pad, disc brake friction agglomerate or disc brake lining presents a positive engagement between the anchoring holder (S, J) and the lining (P, H).

## Description

The present invention relates to an anchoring holder for a disc brake pad, disc brake friction pad or disc brake lining, especially designed for utilization in heavy vehicles. This anchoring holder is also known as back plate or shoe plate of the lining. Furthermore, the present invention relates to a disc brake pad including such an anchoring holder.

In accordance with materials that can be found at the market, and in accordance with the knowledge related to prior art, the linings that are used in those heavy vehicles present the trend to liberate a big amount of heat due to the friction of the lining with the braking discs or brake disc, because the linings are manufactured with friction agglomerated material in order to allow the development of friction forces to brake the vehicle.

When the driver brakes, he transmits the pressure of the linings against the brake disc, and so the transformation of the motion (or kinetic) energy in heat takes place. As a consequence, a fragmentation force against the linings is developed as well, which may cause, together with the dilatations, the arising of cracks between the friction agglomerate or lining and the anchoring holder, which may cause, after a certain period of time, a dislodgement or detachment of the friction agglomerate or lining of or at the anchoring holder.

It is the object of the present invention to present a new base or metallic holder in order to fix or to anchor the friction agglomerate or lining, as to complement and to add to the conventional system now existing in the market.

This object is fulfilled by an anchoring holder or back plate for disc brake pad, disc brake friction agglomerate or disc brake lining according to claim 1 and by a disc brake pad according to claim 10. Preferred embodiments are defined in the dependent subclaims.

According to the present invention, the friction agglomerate or lining is fixed on the metallic holder in pads or plates destined or provided for disc brakes. The anchoring system according to the invention provide bigger mechanical strength for the junction of both materials, so they may dilate and contract in accordance with their working temperature, without the damaging consequences caused by deformations and cracks in the junction of both materials, due to the fact that the friction agglomerate or lining is housed more strongly inside its metallic anchoring holder.

According to a preferred embodiment of the invention, the positive engagement is provided by a small anchoring channel on or at the anchoring holder, to which a protuberance is attached to, the inside of which pertaining to the lining.

The size and therefore the force to be transferred by the small anchoring channel is particular large, in that the small anchoring channel is provided on the peripheral end of the anchoring holder.

The transfer of forces between the anchoring plate and the lining is particular uniform and even, in that the small anchoring channel is round, and in particular circular, and in that the protuberance is round or circular. Furthermore, a round, and in particular a circular channel is very easy to manufacture.

Another preferred embodiment of the anchoring holder according to the invention has an anchoring back protection, as to confine and fix the friction agglomerate or lining, through its external edge, on the internal face of the back protection of the anchoring holder.

This embodiment provides a very even flow of forces between the anchoring plate and the lining, in that the anchoring back protection is located at the periphery of the anchoring holder.

Providing an anchoring back protection, which is round or in particular circular, can reduce the costs of manufacture.

In this patent request two versions or embodiments are presented to turn the invention into reality, although they are just two realizations of an undetermined number of solutions that may be found in order to get the invention done when formats of the friction agglomerate set or lining and the anchoring holder are changed in order to proportionate a rigid fixation to this set.

In order to better evaluate and understand this invention, drawings are being annexed, which include figures of preferred embodiments that are summarily described hereinafter.

Fig. 1 is a longitudinal cut, illustrating a first embodiment of an anchoring holder according to the invention.

Fig. 2 is a longitudinal cut, showing a second embodiment of an anchoring holder according to the invention.

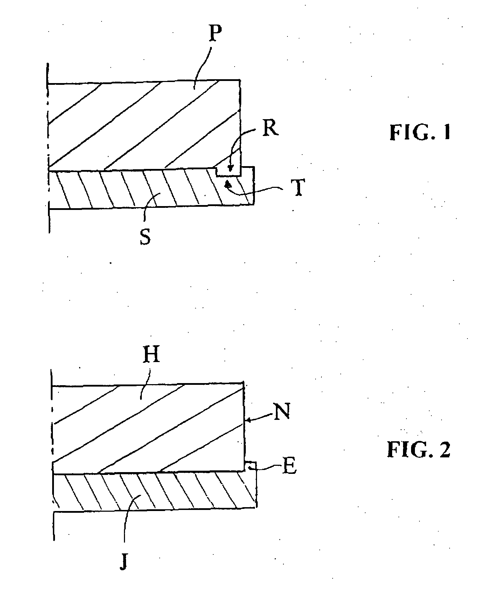

As it may be understood from the drawings, initially taking into consideration the first embodiment according to Fig. 1, a friction agglomerate or lining P is assembled over an anchoring holder S, and a protuberance (which is in the present example round and circular) R of the friction agglomerate or lining P is attached to a small anchoring tunnel or channel T, with the same bending as well, as to adjust and fix rightly the friction agglomerate or lining P on its holder S, avoiding the slipping of this material over the holder, preventing the formation of cracks and providing a suitable function that stands dilatation and contraction of the agglomerating material or lining P.

The second embodiment shown in Fig. 2, presents a friction agglomerate or lining H assembled over an anchoring holder J, and this holder has a round, and/or in particular circular anchoring back protection E located at its end, as to confine the friction agglomerate or lining H within the holder J when an external face N of the friction agglomerate or lining H touches an internal face of the anchoring holder J.

The friction agglomerate H and the anchoring holder J have different dilatation coefficients, as well as different heat dissipation coefficients, but preserve the integrity of the set and the braking efficiency.

And so, the reason for assembling a special holder, incorporating details of an improved functioning, S or J, for the friction agglomerate or lining P is to fix the friction agglomerate or lining P on any base or holder.

Thus, any device that incorporates any confining mean or fixation of the friction agglomerate or lining P on the base or holder, whether S or J, should be included within the protection regarding this invention.

With other words, the anchoring holder for a disc brake pad according to the present invention is destined for friction agglomerates P and H. The friction agglomerate P has e.g. a peripheral protuberance R to be attached on or into a small channel T, which is incorporated at the periphery of the anchoring holder S. In another embodiment, a friction agglomerate H is attached on an anchoring holder J by means of an attachment on an anchoring back protection E, which exists at the periphery of the holder J.

## Claims

1. Anchoring holder or back plate (S, J) for disc brake pad, disc brake friction agglomerate or disc brake lining (P, H),
**characterized in that** it presents a positive engagement between the anchoring holder (S, J) and the lining (P, H).

2. Anchoring holder according to claim 1,
**characterized in that** the positive engagement is provided by a small anchoring channel (T) on or at the anchoring holder (S), to which a protuberance (R) is attached to, the inside of which pertaining to the lining (P).

3. Anchoring holder according to claim 2,
**characterized in that** the small anchoring channel (T) is provided on the peripheral end of the anchoring holder (S).

4. Anchoring holder according to claim 2 or 3,
**characterized in that** the small anchoring channel (T) is round, and **in that** the protuberance (R) is round.

5. Anchoring holder according to claim 4,
**characterized in that** the small anchoring channel (T) is circular, and **in that** the protuberance (R) is circular.

6. Anchoring holder according to claim 1,
**characterized in that** the anchoring holder (J) has an anchoring back protection (E), as to confine and fix the friction agglomerate or lining (H), through its external edge (N), on the internal face of the back protection of the anchoring holder (J).

7. Anchoring holder according to claim 5,
**characterized in that** the anchoring back protection (E) is located at the periphery of the anchoring holder (J).

8. Anchoring holder according to claim 5 or 6,
**characterized in that** the anchoring back protection (E) is round.

9. Anchoring holder according to claim 8,
**characterized in that** the anchoring back protection (E) is circular.

10. Disc brake pad including an anchoring holder according to one of claims 1 to 9.
